# EUROPÄISCHE PATENTSCHRIFT

(11) **EP 0 716 636 B1**
(45) Veröffentlichungstag und Bekanntmachung des Hinweises auf die Patenterteilung: **04.10.2000**
(21) Anmeldenummer: 95917267.7
(22) Anmeldetag: 03.05.1995
(51) Int. Cl.: B60T 17/22, B60T 13/66

(54) **VERFAHREN UND VORRICHTUNG ZUR ABSTIMMUNG EINER ELEKTRISCH-PNEUMATISCHEN BZW. ELEKTRISCH-HYDRAULISCHEN BREMSANLAGE EINES KRAFTFAHRZEUGS**
PROCESS AND DEVICE FOR MATCHING AN ELECTRIC-PNEUMATIC OR ELECTRIC-HYDRAULIC BRAKE SYSTEM FOR A MOTOR VEHICLE
PROCEDE ET DISPOSITIF POUR LA SYNCHRONISATION D'UN SYSTEME DE FREINAGE ELECTRO-PNEUMATIQUE OU ELECTRO-HYDRAULIQUE D'UN VEHICULE AUTOMOBILE

(30) Priorität: 20.05.1994 DE 4417667
(43) Veröffentlichungstag der Anmeldung: 19.06.1996
(73) Patentinhaber: ROBERT BOSCH GMBH, 70442 Stuttgart (DE)
(72) Erfinder: STUMPE, Werner, D-70374 Stuttgart (DE); WREDE, Jürgen, D-70378 Stuttgart (DE); KLEIN, Günter, D-73732 Esslingen (DE)
(86) Internationale Anmeldenummer: DE9500579
(87) Internationale Veröffentlichungsnummer: WO9532116

(56) Entgegenhaltungen:
- EP-A- 0 373 316
- EP-A- 0 535 392
- DE-A- 4 030 980

## Beschreibung

### Stand der Technik

Die Erfindung betrifft ein Verfahren und eine Vorrichtung zur Abstimmung einer elektro-pneumatischen oder elektro-hydraulischen Bremsanlage.

Eine derartige elektro-pneumatische Bremsanlage ist aus der DE-A 33 46 919 (US-Patent 4 585 278) bekannt. Solche Bremsanlagen sind derart ausgebildet, daß an ein elektro-pneumatisch bremsbares Zugfahrzeug sowohl ein mit einer herkömmlichen pneumatischen Bremsanlage ausgerüsteter, als auch ein elektro-pneumatisch bremsbarer Anhänger oder umgekehrt koppelbar ist. Ferner wird bei diesen Bremsanlagen bei Ausfall der Elektronik auf eine konventionelle pneumatische Bremse umgeschaltet (back-up-Bremsung) . Eine entsprechende Ausgestaltung weisen elektro-hydraulische Bremsen auf.

Zur zufriedenstellenden Funktionsweise solcher Bremsanlagen ist der Druckgleichlauf zwischen dem elektrisch und pneumatisch bzw. hydraulisch beeinflußtem Druck von entscheidender Bedeutung, d.h. der über einen elektro-pneumatischen (oder elektro-hydraulischen) Bremskreis gesteuerte Druck an einer oder mehreren Stellen im pneumatischen (oder hydraulischen) Teil der Bremsanlage soll annähernd dem über den reinen pneumatischen (oder hydraulischen) Bremskreis gesteuerten Druck an diesen Stellen entsprechen. Der notwendige Abgleich wird bei den bekannten Bremsanlagen durch aufwendige Justier- und Einstellarbeiten an den einzelnen Ventilen vorgenommen.

Die DE 40 30 980 A1 zeigt den Abgleich von Drucksensoren in den Radbremsen einer Achse. Um diese Drucksensoren untereinander abzugleichen, wird unter vorbestimmten Bedingungen der pneumatische Bremskreis wirksam geschaltet, die Druckwerte gemessen. Die Meßspannungen der Drucksensoren werdeb dann beispielsweise auf einen Mittelwert der Drucksensorsignale abgeglichen. Damit wird zwar der Gleichlauf der Drucksignale einer Achse erreicht, nicht jedoch der Gleichlauf zwischen der elektrischen und pneumatischen oder hydraulischen Steuerung.

Die EP 0 373 316 A1 zeigt die Steuerung von Radbremsen eines Bremskreises im Rahmen einer elektrischen Regelung, während die eines anderen Bremskreises auf herkömmlich pneumatischem oder hydraulischem Wege betätigt werden. Durch Vergleich des elektrischen Betätigungssignals mit dem Bremsdrucksignal des herkömmlichen Bremskreises wird eine Fehlerüberwachung dargestellt. Bei zu großen Abweichungen wird ein Fehler festgestellt. Bei einer Abweichung, die nicht zur Fehlererkennung ausreicht, wird ein Abgleich des Bremsdrucksignals und des elektrischen Betätigungssignals durchgeführt. Ein Abgleich des elektrisch und den pneumatisch oder hydraulisch beeinflußten Drucks wird nicht erreicht.

Es ist Aufgabe der Erfindung, Maßnahmen anzugeben, mit denen der Druckgleichlauf zwischen elektrisch und pneumatisch (bzw. hydraulisch) gesteuertem Druck sichergestellt werden kann, ohne daß aufwendige Justier- und Einstellarbeiten erforderlich sind.

Dies wird durch die kennzeichnenden Merkmale der unabhängigen Patentansprüche erreicht.

Aus der DE-A 40 30 980 ist ein Abgleich des Druckgleichlaufs bei Kraftfahrzeugbremsen bekannt, bei welchem der elektrisch beeinflußte Druck unter Bildung einer im elektronischen Steuergerät abgelegten Zuordnung "Spannung-Druck" für die Drucksensoren der Bremsanlage abgeglichen wird. Eine Sicherstellung des Druckgleichlaufs zwischen elektrisch und pneumatisch (bzw. hydraulisch) beeinflußtem Druck wird dadurch nicht erreicht.

### Vorteile der Erfindung

Die erfindungsgemäße Vorgehensweise verbessert den Abgleich zur Einstellung des Gleichlaufs zwischen elektrisch und pneumatisch bzw. hydraulisch gesteuerten Druck.

Dabei können den Gleichlauf betreffende aufwendige Justier- und Einstellarbeiten an den einzelnen Ventilen der Bremsanlage entfallen.

Die erfindungsgemäße Vorgehensweise führt zu einem verbesserten Abgleich des Druckgleichlaufs am Ende der Kraftfahrzeug- bzw. Bremsanlagenproduktion als auch zu einer Kompensation von lebensdauerbedingten Gleichlaufabweichungen nach Überprüfung der Bremsanlagen im Service.

Besonders vorteilhaft ist, daß mit Hilfe der erfindungsgemäßen Vorgehensweise die gesetzlichen Vorschriften bezüglich der Kompatibilität zwischen einem Zugfahrzeug und einem Anhänger besser eingehalten werden.

Vorteilhaft ist ferner, daß der Druckgleichlauf sowohl bei einem elektrisch gebremsten Zugfahrzeug mit einem konventionell gebremsten Anhänger, als auch beim Übergang von der elektrisch gesteuerten Bremse zum konventionellen Notfahrbetrieb erreicht wird.

Weiterhin ist vorteilhaft, daß zur Durchführung der erfindungsgemäßen Vorgehensweise keine bzw. keine speziellen weiteren Bauelemente erforderlich sind.

Weitere Vorteile ergeben sich aus der nachfolgenden Beschreibung von Ausführungsformen sowie aus den abhängigen Ansprüchen.

### Zeichnung

Die Erfindung wird nachstehend anhand der in der Zeichnung dargestellten Ausführungsformen näher erläutert. Dabei zeigt die Figur 1 ein Übersichtschaltbild einer elektrisch gesteuerten Bremsanlage bzw. eines Teils dieser Bremsanlage, bei der Vorkehrungen zur Durchführung der erfindungsgemäßen Vorgehensweise getroffen sind. Figur 2 zeigt ein Flußdiagramm als Beispiel für ein Rechnerprogramm zur Realisierung der erfindungsgemäßen Vorgehensweise, während in Figur 3 beispielhaft eine abgeglichene Kennlinie dargestellt ist.

### Beschreibung von Ausführungsformen

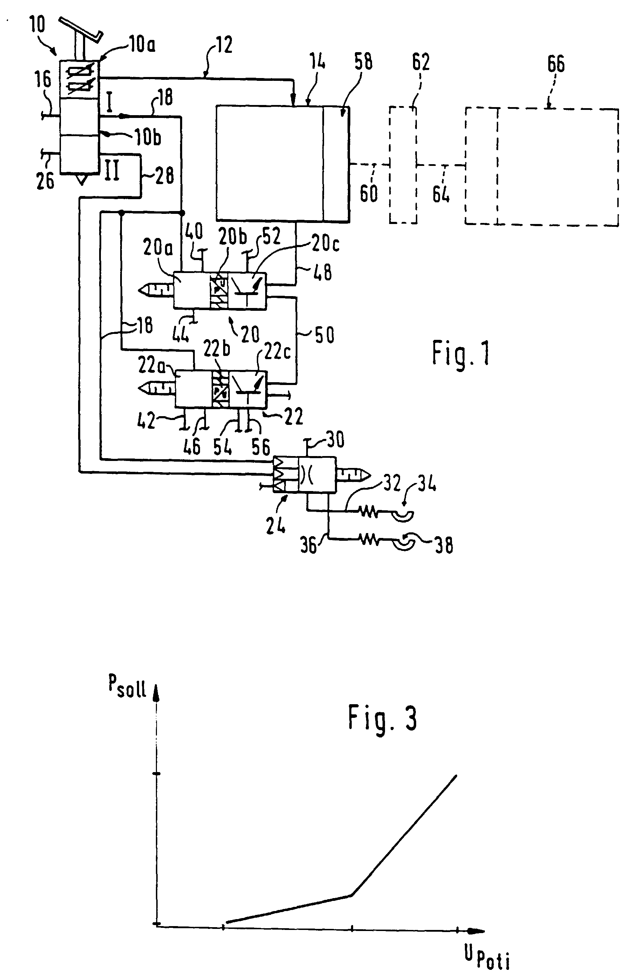

Figur 1 zeigt eine elektrisch steuerbare Bremsanlage für ein Kraftfahrzeug mit Anhänger bzw. Teile dieser Bremsanlage, welche zwei Bremskreise umfaßt. Ein Bremssignalgeber 10 umfaßt einen elektrischen Teil 10a und für beide Bremskreise einen pneumatischen Teil 10b. Dabei umfaßt im bevorzugten Ausführungsbeispiel der elektrische Teil zwei Potentiometer, welche über entsprechende Signalleitungen 12 mit einem elektronischen Steuergerät 14 verbunden sind. Der pneumatische Teil des Bremssignalgebers 23 ist für den ersten Bremskreis I über eine Leitung 16 mit einem nicht dargestellten Vorratsbehälter sowie über eine Leitung 18 mit einem ersten Druckregelmodul 20, einem zweiten Druckregelmodul 22 und einem Anhängersteuerventil 24 verbunden. Für einen zweiten Bremskreis II ist der Bremssignalgeber 10 über eine Leitung 26 mit einem nicht dargestellten Vorratsbehälter sowie über eine Leitung 28 mit dem Anhängersteuerventil 24 verknüpft. An der Leitung 28 können zusätzlich weitere Druckregelmodule angeschlossen sein.

Dem Anhängersteuerventil 24 ist ferner von einem nicht dargestellten Vorratsbehälter die Leitung 30 zugeführt. Die Ausgangsleitung 32 des Anhängersteuerventils führt auf die Anhänger-Vorratsleitungskupplung 34, die Ausgangsleitung 36 auf die Anhänger-Bremsleitungskupplung 38.

Die Druckregelmodule 20 und 22 sind in der Darstellung nach Figur 1 den Rädern einer Achse, vorzugsweise der Hinterachse des Zugfahrzeuges, zugeordnet. Sie umfassen einen pneumatischen Teil 20a bzw. 22a, dem neben der Leitung 18 Leitungen 40 bzw. 42 zu den Radbremszylindern sowie Leitungen 44 bzw. 46 zu nicht dargestellten Vorratsbehältern zugeführt werden. Ferner umfassen die Druckregelmodule Drucksensoren 20b bzw. 22b, welche den Druck in den pneumatischen Leitungen erfassen und einen elektrischen Teil 20c bzw. 22c. Vom elektrischen Teil führen Kommunikationsleitungen 48 bzw. 50 an das Steuergerät 14. Die Kommunikationsleitungen 48 und 50 sind in der Darstellung nach Figur 1 Bussysteme, während in anderen vorteilhaften Ausführungsbeispielen von jedem Druckregelmodul Einzelleitungen zum Steuergerät 14 geführt werden. Dem elektrischen Teil 20c bzw. 22c des Druckregelmoduls 20 bzw. 22 sind ferner elektrische Versorgungsleitungen 52 bzw. 54 oder zusätzliche Sensor- und Steuerleitungen 56 zugeführt, die die Druckregelmodule mit dem elektrischen Steuergerät 14 verbinden. Derartige Druckregelmodule sind bekannt.

In einem bevorzugten Ausführungsbeispiel ist an eine Schnittstelle 58 des elektronischen Steuergeräts 14, vorzugsweise eine ISO-9141-Schnittstelle, über eine Verbindungsleitung 60, einen Schnittstellenkonverter 62 sowie eine Verbindungsleitung 64 eine Diagnose- und/oder Einstelleinrichtung 66, vorzugsweise ein PC, zur Herstellung des Druckgleichlaufs anschließbar.

Die Darstellung gemäß Figur 1 zeigt eine spezielle Anordnung der Bremsanlage. Dabei wurde lediglich der Bremskreis I für eine Achse näher ausgeführt, während der Bremskreis II lediglich auf das Anhängersteuerventil wirkt. Selbstverständlich ist die erfindungsgemäße Vorgehensweise in Verbindung mit allen Anordnungen einer elektrisch betätigbaren Bremsanlage anwendbar. So ist in anderen vorteilhaften Ausführungsbeispielen am Bremskreis II die zweite Achse des Zugwagens angeschlossen. In anderen vorteilhaften Ausführungen ist lediglich ein Druckmodul pro Achse vorgesehen ist. Entsprechend kann auch ein einkreisiges Bremssystem in Verbindung mit der erfindungsgemäßen Vorgehensweise Anwendung finden. Dabei wird der Druck nicht nur im Bereich der Druckregelmodule erfaßt, sondern in einer anderen vorteilhaften Ausführungsform ergänzend oder alternativ zur Erfassung des Druckes in den Druckregelmodulen auch im Anhängersteuerventil. Ferner zeigt die erfindungsgemäße Vorgehensweise ihre Vorteile auch in Verbindung mit einer Druckerfassung in den Leitungen 18 und/oder 28 bzw. 36.

Im Normalbetrieb der Anlage gibt der Fahrer durch Betätigung des Bremssignalgebers 10 von den beiden Potentiometern über die Leitungen 12 dem Fahrerwunsch entsprechende Signale an das Steuergerät 14. Dieses mittelt den Signalwert der beiden Potentiometer und liest aus einer vorgegebenen Kennlinie den an den jeweiligen Druckregelmodulen einzustellenden Solldruck aus. Die Steuereinheiten 20c und 22c in den Druckregelmodulen regeln im Rahmen eines Druckregelkreises durch die Rückführung des Istdruckes den Druck in den Bremsleitungen der Bremszylinder auf den vorgegebenen Solldruck ein.

Entsprechend wird im in Figur 1 dargestellten bevorzugten Ausführungsbeispiel durch Betätigung des Bremssignalgebers das Anhängersteuerventil 24 über die pneumatischen Kreise I und II mit Druck beaufschlagt, welcher zur Betätigung der Anhängerbremsen führt. Die Bauweise solcher Anhängersteuerventile ist bekannt. Bei defekter elektrischer Bremsanlage werden die Durckregelmodule 20, 22 nichit elektrisch angesteuert, so daß durch Betätigung des Bremssignalgebers die Druckmodule 20 und 22 mit Druck beaufschlagt werden und an den Leitungen 40, 42 einen pneumatischen Druck einstellen, so daß zumindest eine Notbremsung des Fahrzeugs gewährleistet ist. Wichtig in diesem Zusammenhang ist, daß der auf pneumatischem Wege eingestellte Bremsdruck dem auf elektrischem Wege eingestellten im wesentlichen entspricht.

Um diesen Druckgleichlauf herzustellen, ist es notwendig, die Beziehung zwischen den Signalwerten des Bremssignalgebers 10 und dem vom Steuergerät eingestellten Solldruck an den durch die pneumatische Bremsanlage bereitgestellten Druck anzupassen.

Dazu läuft in der Fahrzeugmontage am Bandende, zu Inspektions- bzw. Serviceintervallen oder bei einem Werkstattaufenthalt des Fahrzeugs im Steuergerät 14 oder in dem anschließbaren Diagnose- und Einstellgerät 66 ein Rechenprogramm ab, durch welches der Zusammenhang zwischen den Signalwerten und dem Solldruck im Sinne eines Gleichlaufs des Druckes im elektrischen und pneumatischen Steuersystem ermittelt und schließlich im Steuergerät 14 gespeichert wird.

Dazu muß in der Bremsanlage mindestens ein Drucksensor vorzugsweise an einer Stelle, die für den Gleichlauf zwischen elektrisch und pneumatisch beeinflußtem Druck wichtig ist, angeordnet sein. Dieser ist im bevorzugten Ausführungsbeispiel Teil der den Radbremsylindern zugeordneten Druckregelmodule z.B. Drucksensor 20b oder 22b. In anderen vorteilhaften Ausführungsbeispielen ist dieser Drucksensor für den Zweck des Abgleichs montiert, beispielsweise in den Leitungen 18, und/oder 28 oder in der Ausgangsleitung 36 bzw. am Anhänger-Bremsleistungskupplungskopf 38. Ferner kann in einem anderen Ausführungsbeispiel ergänzend oder alternativ der Drucksensor im Anhängersteuerventil 24 angebracht sein.

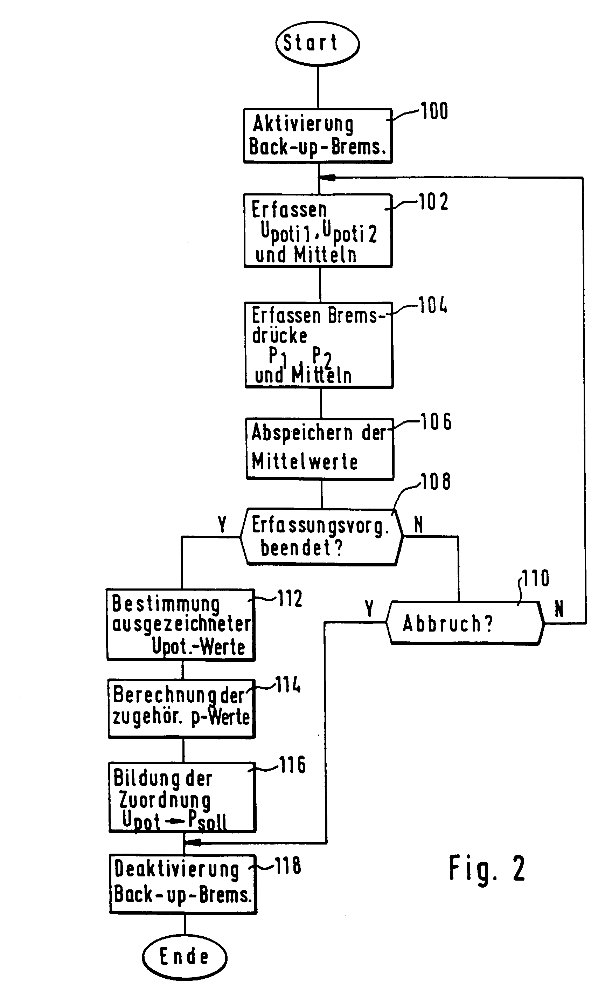

Zur Herstellung des gewünschten Druckgleichlaufes ermittelt das Steuergerät 14 oder das Diagnose- und Einstellgerät 66 eine Zuordnung zwischen dem vom Bremssignalgeber 10 erfaßten Fahrerwunsch und dem durch die Drucksensoren 20b bzw. 22b erfaßten, über den pneumatischen Teil beeinflußten Druck, welcher über das Kommunikationssystem 48, 50 an das Steuergerät 14 zurückgemeldet wird. Wird in der Steuereinheit 14 der Abgleichvorgang aktiviert, so läuft dort oder im aktivierenden Diagnose- und Einstellgerät 66 das in Figur 2 anhand eines Flußdiagrammes skizzierte Rechenprogramm ab.

Mit Aktivierung des Abgleichvorgangs wird die sogenannte "Back-Up-Bremsung" aktiviert, d.h. die elektrisch beeinflußte Druckeinsteuerung wird abgeschaltet (Schritt 100). Danach wird beispielsweise durch eine Bedienperson oder automatisch das Bremspedal langsam betätigt. Mit jedem Programmdurchlauf werden während des Betätigungsvorganges gemäß Schritt 102 die Potiwerte U_{Poti1} und U_{Poti2} und im Schritt 104 die Bremsdruckwerte P₁ und P₂ erfaßt und gemittelt. Die ermittelten Mittelwerte werden im Schritt 106 abgespeichert. Danach wird im Schritt 108 überprüft, ob der Erfassungsvorgang beendet ist. Ist dies nicht der Fall, wird der Programmteil beginnend mit Schritt 102 wiederholt.

Dabei ist bei Ventilen mit Hysterese wesentlich, daß beim Erfassungvorgang die aufeinanderfolgenden Potentiometerwerte sich immer in einer Richtung unterscheiden, beispielsweise immer größer werden. Dadurch wird sichergestellt, daß immer nur ein Ast der vorhandenen Hysterese des pneumatischen Steuerteils durchlaufen wird. Wird ein in entgegengesetzter Richtung abweichender Meßwert erfaßt, wird der Abgleichvorgang für die vorgegebene Richtung (erster Ast der Hysterese) abgebrochen (Schritt 110). Nach einem Umschaltsignal kann in gleicher Weise bei Bedarf auch der zweite Ast der Hysterese ermittelt werden.

Ist der Erfassungsvorgang beendet, so werden in einem bevorzugten Ausführungsbeispiel gemäß Schritt 112 ausgezeichnete Potentiometerwerte bestimmt. Bei herkömmlichen Bremsventilen ergibt sich infolge der verwendeten Federn ein Knickpunkt der Kennlinie. Dieser Knickpunkt wird aus den erfaßten Mittelwerten, beispielsweise durch Bildung der zweiten Ableitung, berechnet. Dieser Knickpunkt (bzw. ein Wert vor und einer nach dem Knickpunkt) sowie ein Anfangswert (Beginn der Druckzunahme) und ein Endwert (Ende der Druckzunahme) können solche ausgezeichnete Werte darstellen. Danach werden im Schritt 114 zu diesen ausgezeichneten Potentiometerwerten die zugehörigen Druckwerte aus den abgespeicherten Mittelwerten durch Interpolation bzw. Regression berechnet und im Schritt 116 eine Zuordnungstabelle der ausgezeichneten Potentiometerwerten zu den berechneten Druckwerten gebildet. Die Druckwerte werden dabei als Solldruckwerte interpretiert. Nach Abschluß des Schrittes 116 wird im Schritt 118 die Back-Up-Bremsung wieder deaktiviert und der Programmteil beendet.

Die Zuordnungstabelle 116 enthält somit eine Zuordnung des elektrischen Fahrerwunschsignals zum einzustellenden Solldruck, welcher durch eine Abgleichbremsung mit dem pneumatischen Teil der Bremsanlage ermittelt wurde. Es wird somit ein Druckgleichlauf zwischen elektrischem und pneumatisch beeinflußtem Druck hergestellt.

Ein Beispiel für eine derartige Kennlinie ist in Figur 3 dargestellt.

Diese Kennlinie ist lediglich beispielhaft und je nach verwendeten Bremsventilen unterschiedlich.

Dabei kann in anderen vorteilhaften Anwendungen die Bestimmung der ausgezeichneten Potentiometerwerte entfallen und die abgespeicherten Mittelwerte oder vorbestimmte Stützstellen als Grundlage der Zuordnungstabelle verwendet werden.

Im Betrieb wird der einzustellende Solldruck abhängig vom Fahrerwunschsignal aus der Zuordnungstabelle bzw. der Kennlinie ausgelesen.

Das pneumatische Steuersystem weist eine Hysterese auf. Dadurch ergeben sich verschiedene Möglichkeiten der Abgleichsdurchführung. Zum einen kann, wie anhand Figur 2 erläutert, lediglich die Bremsbetätigung in Betracht gezogen und der Abgleich darauf gestützt werden. Ferner kann in einem anderen vorteilhaften Ausführungsbeispiel lediglich der absteigende Ast bei Lösen der Bremse zum Abgleich herangezogen werden. In einem weiteren vorteilhaften Ausführungsbeispiel können sowohl Bremsbetätigung als auch Lösen der Bremse erfaßt werden und aus gemittelten Werten der Abgleich durchgeführt werden.

Entsprechend kann in dem einen oder anderen Anwendungsfall vorteilhaft sein, die Kennlinie bzw. Zuordnungstabelle durch Mittelung aus zwei oder mehr Abgleichvorgängen zu ermitteln.

Die entsprechende Anwendung der erfindungsgemäßen Vorgehensweise in Verbindung mit elektro-hydraulischen Bremsen zeigt die ensprechenden Vorteile.

## Patentansprüche

1. Verfahren zur Abstimmung einer elektrisch-pneumatischen oder elektrisch-hydraulischen Bremsanlage eines Kraftfahrzeugs, wobei durch Betätigung des Bremssignalgebers (10) ein elektrischer (Upoti) und ein pneumatischer oder hydraulischer Fahrerwunsch gebildet wird, und wenigstens ein elektrisch und ein pneumatisch oder hydraulisch beeinflußter Druck (P1, P2) in der Bremsanlage erfaßt wird, wobei in einem ersten Betriebszustand der Druck (P1, P2) an den Radbremsen der Bremsanlage durch elektrische Regelung nach Maßgabe des elektrischen Fahrerwunsches (Upoti) eingestellt wird, dadurch gekennzeichnet, daß der Basis einer Zuordnung zwischen Fahrerwunsch und Druck aus dem elektrischen Fahrerwunsch (Upoti) ein der elektrischen Regelung zugrundeliegender Sollwert (Psoll) ermittelt wird, in einem zweiten Betriebszustand unter Abschaltung der elektrischen Regelung der Druck an den Radbremsen abhängig von dem pneumatischen oder hydraulischen Fahrerwunsch eingestellt wird, wobei im zweiten Betriebszustand Bremsdruckwerte (P1, P2) und elektrische Fahrerwunschwerte (Upoti) ermittelt werden und die Zuordnung aus den erfaßten elektrischen Fahrerwunschwerte und den Bremsdruckwerten abgeleitet wird.

2. Verfahren nach Anspruch 1, dadurch gekennzeichnet, daß das Ableiten der Zuordnung am Bandende und/oder in Servicewerkstätten durchgeführt wird.

3. Verfahren nach einem der vorhergehenden Ansprüche, dadurch gekennzeichnet, daß die erfaßten Bremsdruckwert die Druckwerte in Druckregelmodulen, die jedem Rad, mehreren Rädern oder einer Achse zugeordnet sind, der Druckwert eines Anhängersteuerventils oder Druckwerte in pneumatischen bzw. hydraulischen Leitungen der Bremsanlage sind.

4. Verfahren nach einem der vorhergehenden Ansprüche, dadurch gekennzeichnet, daß die Zuordnung eine Zuordnungstabelle oder eine Funktionsgleichung von elektrischen Fahrerwunschwerten (Upoti) zu Solldruckwerten (Psoll) ist.

5. Verfahren nach einem der vorhergehenden Ansprüche, dadurch gekennzeichnet, daß die Aktivierung des Ableitvorgangs mittels eines Diagnosegerätes, vorzugsweise eines PC, und das Ableiten durch dieses oder durch das Steuergerät der Bremsanlage durchgeführt wird.

6. Verfahren nach einem der vorhergehenden Ansprüche, dadurch gekennzeichnet, daß der Erfassungsvorgang lediglich die Bremsbetätigung, das Lösen der Bremse oder einen vollständigen Bremsvorgang mit Betätigen und Lösen der Bremse umfaßt.

7. Vorrichtung zur Abstimmung einer elektrisch-pneumatischen oder elektrisch-hydraulischen Bremsanlage eines Fahrzeugs
- mit einem elektronischen Steuergerät (14) zur elektrischen Steuerung der Bremsanlage,
- mit Mitteln (I, II) zur pneumatischen oder hydraulischen Steuerung der Bremsanlage,
- mit einem Bremssignalgeber (10), durch dessen Betätigung ein elektrischer (Upoti) und ein pneumatischer oder hydraulischer Fahrerwunsch gebildet wird,
- mit Mitteln (20b, 22b) zur Erfassung wenigstens eines elektrischen und eines pneumatischen oder hydraulischen beeinflußten Druckwerts in der Bremsanlage, wobei das Steuergerät (14) in einem ersten Betriebszustand den Druck (P1, P2) an den Radbremsen der Bremsanlage durch elektrische Regelung nach Maßgabe des elektrischen Fahrerwunsches (Upoti) einstellt, dadurch gekennzeichnet, daß das Steuergerät (14) einen Speicher umfaßt, in dem eine Zuordnung zwischen Fahrerwunsch und Druck gespeichert ist, auf deren Basis aus dem elektrischen Fahrerwunsch (Upoti) ein der elektrischen Regelung zugrundeliegender Sollwert (Psoll) ermittelt wird, in einem zweiten Betriebszustand unter Abschaltung der elektrischen Regelung der Druck an den Radbremsen abhängig von dem pneumatischen oder hydraulischen Fahrerwunsch eingestellt wird, wobei im zweiten Betriebszustand das Steuergerät (14) Bremsdruckwerte (P1, P2) und elektrische Fahrerwunschwerte (Upoti) erfaßt und speichert, aus denen die Zuordnung aus den erfaßten elektrischen Fahrerwunschwerte und den Bremsdruckwerten abgeleitet wird.

## Claims

1. Method for synchronizing an electro-pneumatic or electro-hydraulic brake system of a motor vehicle, an electrical driver's wish (Upot) and a pneumatic or hydraulic driver's wish being formed as a result of the brake-signal generator (10) being actuated, and at least one electrically influenced and one pneumatically or hydraulically influenced pressure (P1, P2) in the brake system being detected, and, in a first operating state, the pressure (P1, P2) at the wheel brakes of the brake system being set by electrical regulation in accordance with the electrical driver's wish (Upot), characterized in that a desired value (P_{des}) on which electrical regulation is based is determined from the electrical driver's wish (Upot) on the basis of an association between the driver's wish and pressure, and, in a second operating state, with electrical regulation being switched off, the pressure at the wheel brakes is set as a function of the pneumatic or hydraulic driver's wish, in the second operating state brake-pressure values (P1, P2) and electrical driver's wish values (Upot) being determined and the association being derived from the detected electrical driver's wish values and the brake-pressure values.

2. Method according to Claim 1, characterized in that the derivation of the association is carried out at the line end and/or in service workshops.

3. Method according to one of the preceding claims, characterized in that the detected brake-pressure values are the pressure values in pressure-regulating modules assigned to each wheel, a plurality of wheels or an axle, the pressure value of a trailer control valve or pressure values in pneumatic or hydraulic lines of the brake system.

4. Method according to one of the preceding claims, characterized in that the association is an association table or a functional equation of electrical driver's wish values (Upot) to desired-pressure values (P_{des}).

5. Method according to one of the preceding claims, characterized in that the activation of the derivation operation is carried out by means of a diagnostic unit, preferably a PC, and derivation is carried out by means of this or by means of a control unit of the brake system.

6. Method according to one of the preceding claims, characterized in that the detection operation comprises merely brake actuation, the release of the brake or a complete braking operation with actuation and release of the brake.

7. Device for synchronizing an electro-pneumatic or electro-hydraulic brake system of a vehicle,
- with an electronic control unit (14) for the electrical control of the brake system,
- with means (I, II) for the pneumatic or hydraulic control of the brake system,
- with a brake-signal generator (10), as a result of the actuation of which an electrical driver's wish (Upot) and a pneumatic or hydraulic driver's wish are formed,
- with means (20b, 22b) for detecting at least one electrically and one pneumatically or hydraulically influenced pressure value in the brake system, in a first operating state the control unit (14) setting the pressure (P1, P2) at the wheel brakes of the brake system by electrical regulation in accordance with the electrical driver's wish (Upot),
characterized in that the control unit (14) comprises a memory, in which is stored an association between the driver's wish and pressure, on the basis of which association a desired value (P_{des}) on which electrical regulation is based is determined from the electrical driver's wish (Upot), and, in a second operating state, with electrical regulation being switched off, the pressure at the wheel brakes is set as a function of the pneumatic or hydraulic driver's wish, in the second operating state the control unit (14) depicting and storing brake-pressure values (P1, P2) and electrical driver's wish values (Upot), from which the association of the detected electrical driver's wish values and the brake-pressure values is derived.

## Revendications

1. Procédé pour synchroniser un système de freinage électro-pneumatique ou électro-hydraulique d'un véhicule automobile selon lequel :
- en actionnant le capteur de signal de frein (10), on forme un souhait électrique (Upoti) et un souhait pneumatique ou hydraulique du conducteur et,
- on saisit au moins une pression (P1, P2) d'influence électrique et pneumatique ou hydraulique dans le système de freinage,
- et dans un état de fonctionnement, on règle la pression (P1, P2) des freins de roues de l'installation de freinage par régulation électrique selon l'indication du souhait du conducteur, électrique (Upoti),
caractérisé en ce que
- sur la base d'une relation entre le souhait du conducteur et la pression, on détermine à partir du souhait du conducteur, électrique (Upoti) une valeur de consigne (P_{cons}) à la base de la régulation électrique,
- dans un second état de fonctionnement, après avoir coupé la régulation électrique, on règle la pression des freins de roues en fonction du souhait pneumatique ou hydraulique du conducteur,
- dans un second état de fonctionnement, on détermine les valeurs des pressions de frein (P1, P2) et les valeurs de souhait de conducteur, électriques (Upoti),
- et on déduit la relation à partir des valeurs électriques du souhait du conducteur et les valeurs de la pression de frein.

2. Procédé selon la revendication 1,
caractérisé en ce qu'
on déduit la relation à la sortie de la chaîne de fabrication et/ou dans des garages.

3. Procédé selon l'une quelconque des revendications précédentes,
caractérisé en ce que
la valeur de pression de frein saisie, est la valeur de pression dans les modules de régulation de pression associés à chaque roue, à plusieurs roues ou à un essieu, la valeur de la pression d'une vanne de commande de remorque ou la valeur de la pression dans les conduites pneumatiques et hydrauliques de l'installation de frein.

4. Procédé selon l'une quelconque des revendications précédentes,
caractérisé en ce que
la relation est un tableau de concordance ou une équation fonctionnelle entre les valeurs électriques du souhait du conducteur (Upoti) et les valeurs de la pression de consigne (P_{cons}).

5. Procédé selon l'une quelconque des revendications précédentes,
caractérisé en ce qu'
on active l'opération de déduction à l'aide d'un appareil de diagnostic de préférence un PC et on exécute la déduction avec celui-ci ou par l'appareil de commande de l'installation de frein.

6. Procédé selon l'une quelconque des revendications précédentes,
caractérisé en ce que
l'opération de saisie comprend uniquement l'actionnement des freins, la libération des freins ou une opération de freinage, complète avec actionnement et libération des freins.

7. Dispositif pour synchroniser un système de freinage électro-pneumatique ou électro-hydraulique d'un véhicule comprenant :
- un appareil de commande électronique (14) pour commander électriquement l'installation de frein,
- des moyens (I, II) pour la commande pneumatique ou hydraulique de l'installation de frein,
- un capteur de signal de frein (10) dont l'actionnement donne un signal électrique (Upoti) ou pneumatique ou hydraulique représentant le souhait du conducteur,
- des moyens (20b, 22b) pour saisir au moins une valeur de pression électrique ou pneumatique ou hydraulique influencée dans l'installation de freinage,
- l'appareil de commande (14) réglant dans un premier état de fonctionnement, la pression (P1, P2) des freins de roues de l'installation de freins par régulation électrique selon l'indication du souhait électrique du conducteur (Upoti),
caractérisé en ce que
- l'appareil de commande (14) comprend une mémoire dans laquelle est enregistrée une relation entre le souhait du conducteur et la pression, sur la base de laquelle, à partir du souhait électrique du conducteur (Upoti), on détermine une valeur de consigne (P_{cons}) basée sur la régulation électrique, et
- dans un second état de fonctionnement en coupant la régulation électrique, on règle la pression des freins de roues en fonction du souhait pneumatique ou hydraulique du conducteur, second état de fonctionnement dans lequel l'appareil de commande (14) saisit et mémorise les valeurs de pression de freins (P1, P2) et les valeurs électriques du souhait du conducteur (Upoti), pour en déduire la relation entre la valeur électrique du souhait du conducteur et les valeurs de pression de frein.
